# EUROPÄISCHE PATENTSCHRIFT

(11) **EP 0 602 205 B1**
(45) Veröffentlichungstag und Bekanntmachung des Hinweises auf die Patenterteilung: **11.02.1998**
(21) Anmeldenummer: 93912595.1
(22) Anmeldetag: 18.06.1993
(51) Int. Cl.: G01N 27/411, C04B 35/48

(54) **TEMPERATURFESTE KERAMIK**
TEMPERATURE-RESISTANT CERAMIC
CERAMIQUE RESISTANT AUX TEMPERATURES ELEVEES

(30) Priorität: 03.07.1992 DE 4221786
(43) Veröffentlichungstag der Anmeldung: 22.06.1994
(73) Patentinhaber: ROBERT BOSCH GMBH, 70442 Stuttgart (DE)
(72) Erfinder: FRIESE, Karl-Hermann, D-7250 Leonberg (DE)
(86) Internationale Anmeldenummer: DE9300524
(87) Internationale Veröffentlichungsnummer: WO9401762

(56) Entgegenhaltungen:
- EP-A- 0 209 081
- EP-A- 0 414 575
- EP-A- 0 454 138
- WO-A-92/12105
- GB-A- 2 204 030
- PATENT ABSTRACTS OF JAPAN vol. 13, no. 241 (C-604) 6 June 1989 JP,A,1 051 377 (ISHIKAWAJIMA HARIMA HEAVY IND. CO. LTD.) 27 February 1989
- PATENT ABSTRACTS OF JAPAN vol. 13, no. 107 (C-576) 14 March 1989 & JP,A,63 282 124 (AGENCY OF IND. SCIENCE & TECHNOL.) 18 November 1988

## Beschreibung

### Stand der Technik

Die Erfindung geht aus von einer temperaturfesten Keramik nach der Gattung der übergeordneten Ansprüche. Von technischer Bedeutung sind derartige Stoffe insbesondere als ionenleitende Formkörper, die zum Beispiel plättchen- oder fingerförmig sein können, auf ihren einander gegenüberliegenden Oberflächen Elektroden und gegebenenfalls Schutzschichten tragen und als Meßfühler in Abgasen, zum Beispiel von Kraftfahrzeugen, eingesetzt werden können. Wesentliche Bedingungen, die dabei an die Festelektrolytkeramik gestellt werden, betreffen die mechanischen Eigenschaften, wie Festigkeit und Temperaturschockfestigkeit sowie die elektrischen Eigenschaften, insbesondere die Ionenleitfähigkeit.

Eine Möglichkeit, gleichzeitig die mechanischen Eigenschaften und die O²⁻ -Ionenleitfähigkeit zu verbessern, besteht entsprechend der nicht vorveröffentlichten DE-A 41 00 105 darin, mindestens zwei handelsübliche Keramikpulver mit unterschiedlichen Stabilisatoroxidanteilen zur Herstellung einer Festelektrolytkeramik einzusetzen, wobei die guten mechanischen Eigenschaften der niedrig stabilisierten Keramik und gleichzeitig die guten Leitfähigkeitseigenschaften der hochstabilisierten Keramik ausgenützt werden.

Gute mechanische Eigenschaften und gleichzeitig gute O² -Ionenleitfähigkeit werden auch entsprechend der EP-A 209 081 erhalten durch Cosintern von mindestens einem Pulver mit einem ausreichend hohen Stabilisatoroxidgehalt, um im Endprodukt kubisches Zirkoniumdioxid zu bilden, mit mindestens einem Pulver mit niedrigerem Stabilisatoroxidgehalt, das im Endprodukt in der tetragonalen Modifikation vorliegen soll. Dabei enthält das hochstabilisierte Pulver vorzugsweise 8 Gew.% Yttriumoxid, gegenüber 4 Gew.% Yttriumoxid für das niedrigstabilisierte Pulver.

Aus der DE-A 38 13 731 ist es bekannt, Zirkoniumdioxidteilchen mit wasserhaltigen Oxiden in einem Naßbehandlungsprozeß zu beschichten. Dazu werden in eine wässrige Dispersion des teilchenförmigen Zirkoniumdioxids wasserlösliche Salze eingebracht, die bei Hydrolyse die wasserhaltigen Oxide der Beschichtung bilden. Durch Erhöhen des pH wird die wasserhaltige Oxidbeschichtung abgelagert, und anschließend das Produkt durch Filtrieren abgetrennt, gewaschen, getrocknet und gegebenenfalls gemahlen. Das Produkt stellt dadurch, daß es die Oxidzusätze als Beschichtung aufweist, eine gutverteilte und innige Mischung des Zirkoniumdioxids mit den Oxidzusätzen dar.

Für die technisch/wirtschaftlich bedeutende Verwendung zur Herstellung von Lambdasonden für die Sauerstoffpartialdruckbestimmung in Abgasen von Verbrennungsmotoren weisen die bekannten Festelektrolytkeramikstoffe eine noch unbefriedigende Beständigkeit unter den extremen Bedingungen in der Abgasanlage von Kraftfahrzeugen auf, insbesondere eine noch nicht vollständig befriedigende Festigkeit gegen Schlag-, Dauerschwing- und Temperaturschockbeanspruchung.

### Vorteile der Erfindung

Die erfindungsgemäße Keramik hat demgegenüber den Vorteil, eine erhöhte mechanische Festigkeit gegen Schlag-, Dauerschwing- und insbesondere auch Temperaturschockbeanspruchung aufzuweisen.

Vorzugsweise handelt es sich dabei um eine Festelektrolytkeramik; in diesem Fall wird zusätzlich zur Verbesserung der mechanischen Eigenschaften durch Einsatz des gefügeverspannenden, mit diffusionshemmenden Oxiden beschichteten zweiten Keramikpulvers der Vorteil erzielt, daß die O²-Ionenleitfähigkeit des ersten, hochstabilisierten Keramikpulvers, nicht beeinträchtigt wird.

Die Erfindung ist jedoch gleichermaßen auf temperaturfeste Keramiken anwendbar, die keine Festelektrolyte sind, zum Beispiel Mullit, Cordierit, Glaskeramik, Zirkonsilikat u.a.

Es ist bekannt, die Festigkeit von ZrO₂-Keramik dadurch zu verbessern, daß in eine Matrix von hochstabilisiertem, kubischen ZrO₂ tetragonale ZrO₂-Teilchen eingebracht werden, die sich beim Abkühlen nach dem Sinterprozeß unter Gittervolumenerhöhung in die monokline Phase umwandeln und dadurch eine Gefügeverspannung und somit Festigkeitserhöhung der Keramik erzeugen. (Zum Beispiel aus R. Stevens: Zirconia and Zirconia Ceramics, Magnesium electron Ltd., 1986, Seiten 17, 18). Es war weiterhin bekannt, durch Zusätze von Al₂O₃ die Gefügeverspannung und damit die Festigkeit der ZrO₂-Keramik weiter zu erhöhen.

Demgegenüber werden erfindungsgemäß erhebliche technische Vorteile, insbesondere verbesserte Festigkeit, Bruchzähigkeit und Temperaturschockbeständigkeit dadurch erreicht, daß mindestens ein niedrig- bzw. nichtstabilisiertes Keramikpulver mit einem die Diffusion der Stabilisatoroxidkationen behindernden Oxid beschichtet wird und anschließend in bekannter Weise mit mindestens einem hochstabilisierten Keramikpulver gemischt, verpreßt und anschließend gesintert wird. In besonders vorteilhafter Weise wird dazu niedrig- bzw. nichtstabilisiertes ZrO₂ mit einer Beschichtung von Al₂O₃ eingesetzt. Eine ähnliche Wirkung wird auch mit Ga₂O₃ oder Na-β-Al₂O₃ allein, im Gemisch miteinander oder im Gemisch mit Al₂O₃ erreicht. Die Oxidbeschichtung auf den niedrig- bzw. nichtstabilisierten Keramikpulvern behindert eine Angleichung der Stabilisatoroxidkonzentrationen zwischen hoch- und niedrig- bzw. nichtstabilisierten Keramikkörnern beim Sinterprozeß und ermöglicht eine homogene Verteilung der hochstabilisierten Bereiche mit guter O²⁻ -Ionenleitfähigkeit sowie der niedrig- bzw. nichtstabilisierten Bereiche, die durch Phasenumwandlung zur Festigkeitssteigerung führen. In besonders vorteilhafter Weise behindert die Oxidbeschichtung das unkontrollierte Kornwachstum während des Sinterprozesses. Durch den vorteilhaften Einsatz von feinteiligen Keramikpulvern, insbesondere von hochstabilisierten Keramikpulver der Korngröße von etwa 0,5 bis 2 µm und niedrig- bzw. nichtstabilisierten Keramikpulver mit einer Korngröße unter 0,5 µm können daher sehr feinteilige Gefüge in der gesinterten Keramik erreicht werden.

Es ist möglich, die ersten, hochstabilisierten Keramikpulver, in üblicher Weise durch Kopräzipitieren von O²⁻-leitenden Oxiden und Stabilisatoroxiden herzustellen. Besonders vorteilhaft können jedoch sowohl erste als auch zweite Keramikpulver durch Beschichten von ZrO₂, in einem Naßbehandlungsprozeß, wie er zum Beispiel in der DE-A 38 13 731 beschrieben ist, erhalten werden.

### Beschreibung der Ausführungsbeispiele

Die Erfindung wird im folgenden anhand von Ausführungsbeispielen näher erläutert.

Beispiel 1: Es wird zunächst die wässrige Lösung eines Zirkoniumsalzes, zum Beispiel ZrCl₂ mit der wässrigen Lösung eines Yttriumsalzes, vereinigt, wobei das Mengenverhältnis so eingestellt wird, daß im fertigen yttriumoxidstabilisierten Zirkoniumdioxidpulver ein Yttriumoxidanteil von 9 Mol% vorliegt; aus den vereinigten Lösungen werden die Zr- und Y-Salze kopräzipitiert, calziuniert und anschließend aufgemahlen, wobei eine mittlere Korngröße von 1,5 µm eingestellt wird.

Ein zweites Keramikpulver auf ZrO₂-Basis wird dadurch hergestellt, daß zu einer wässrigen Dispersion von Zirkoniumdioxid mit einer Korngröße unter 0,5 µm vorzugsweise unter 0,45 µm, das zum Beispiel durch reaktive Zersetzung von ZrCl₂ im Plasmabrenner, wie in der DE-PS 38 13 731 beschrieben, hergestellt wurde, eine Dispersion von Aluminiumoxid zugefügt wird, wobei der Aluminiumoxidgehalt, bezogen auf die Summe von Zirkoniumdioxid und Aluminiumoxid, 10 Gew.-% beträgt. In bekannter Weise wird, zum Beispiel durch kontrollierte Einstellung des pH, eine Aluminiumoxidbeschichtung auf den Zirkoniumdioxidteilchen abgelagert, das Produkt wird durch Filtrieren abgetrennt, gewaschen und getrocknet.

Die beiden so hergestellten Keramikpulver werden nun im Gewichtsverhältnis erstes zu zweites Pulver von 90 zu 10 in Schlickerform vereinigt, sprühgetrocknet, gegebenenfalls unter Zusatz von organischen Bindern und/oder Preßhilfsmitteln und anschließend zu Formkörpern verpreßt oder als Gießschlicker zu Folien vergossen und bei 1400° C gesintert. Die so erhaltenen Keramikformkörper weisen eine verbesserte Temperaturschockfestigkeit auf.

Beispiel 2: Es wird zunächst ein erstes Keramikpulver durch Beschichtung von Zirkoniumdioxid mit Yttriumoxid hergestellt. Dazu wird eine wässrige Dispersion von Zirkoniumdioxid einer Korngröße im Bereich von 0,5 µm bis 2 µm mit einer Yttriumsalz-Lösung vereinigt, wobei das Mengenverhältnis so eingestellt wird, daß der Yttriumoxidgehalt, bezogen auf die Summe von Yttriumoxid und Zirkoniumdioxid, 5 Mol.% beträgt. Durch kontrollierte Einstellung des pH-Wertes der Lösung wird das Yttriumhydroxid auf den Zirkoniumdioxidteilchen präzipitiert; das Produkt wird durch Filtrieren abgetrennt, gewaschen, getrocknet und kalziniert .

Ein zweites Pulver wird in der unter Beispiel 1 beschriebenen weise durch Beschichten von Zirkoniumdioxid mit Aluminiumoxid hergestellt, wobei ein Aluminiumoxidanteil von 10 Gew.% eingestellt wird.

Die beiden Pulver werden nun im Gewichtsverhältnis 80:20 von ersten zu zweitem Pulver, in Schlickerform, vermischt, sprühgetrocknet, gegebenenfalls unter Zusatz von Bindern und/oder Preßhilfsmitteln, zu Formkörpern verpreßt und bei 1400° C gesintert. Die so erhaltenen Keramikformkörpern weisen eine erhöhte Temperaturschockbeständigkeit auf.

Beispiel 3: Ein erstes Keramikpulver wird durch Äufschmelzen im Lichtbogen von Zirkoniumdioxid und 9 Mol% Yttriumoxid hergestellt und auf eine Korngröße im Bereich von 1 bis 2 µm aufgemahlen.

Die Herstellung des zweiten Keramikpulvers sowie die weitere Verarbeitung von erstem und zweitem Keramikpulver erfolgt wie unter Beispiel 1 beschrieben.

## Patentansprüche

1. Temperaturschockresistente Keramik, hergestellt aus mindestens einem ersten Keramikpulver und einem zweiten Keramikpulver mit den vierwertigen Oxiden Zirkoniumdioxid und/oder Hafniumdioxid und/oder Thoriumdioxid als Hauptkomponente, wobei die eingesetzten Keramikpulver nach Vereinigung und gemeinsamer Sinterung die homogene temperaturschockresistente Keramik bilden, dadurch gekennzeichnet, daß das erste Keramikpulver höher stabilisiert ist als das zweite Keramikpulver und letzteres einen Stabilisatoroxidanteil zwischen 0 und 2,5 Molprozent Y₂O₃ oder die äquivalente Menge eines anderen Stabilisatoroxids oder Stabilisatoroxidgemisches enthält und daß das zweite Keramikpulver aus Körnern besteht, deren Oberfläche ganz oder teilweise mit einer die Diffusion der Stabilisatoroxidkationen hemmenden Beschichtung bedeckt ist.

2. Keramik nach Anspruch 1, dadurch gekennzeichnet, daß die Beschichtung der Körner des zweiten Keramikpulvers aus Al₂O₃ und/oder Ga₂O₃ und/oder Na-β-Al₂O₃ besteht.

3. Keramik nach Anspruch 1 oder 2, dadurch gekennzeichnet, daß das zweite Keramikpulver aus einer Mischung von ZrO₂ und Al₂O₃, vorzugsweise 10 Gew.% Al₂O₃ besteht.

4. Keramik nach Anspruch 1, dadurch gekennzeichnet, daß das erste Keramikpulver einen Stabilisatoroxidanteil von wenigstens 4 Mol% Y₂O₃ oder die äquivalente Menge eines anderen Stabilisatoroxids oder Stabilisatoroxidgemisches enthält.

5. Keramik nach Anspruch 1, dadurch gekennzeichnet, daß das erste Keramikpulver eine Korngröße im Bereich von 0,5 bis 2 µm und das zweite Keramikpulver eine Korngröße unter 0,5 µm aufweist.

6. Keramik nach Anspruch 1 , dadurch gekennzeichnet, daß das erste Keramikpulver durch Ko-Fällung von Basisoxiden mit Stabilisatoroxiden aus vereinigten Suspensionen der Ausgangsstoffe, Kalzinieren, mit anschließender Mahlung, hergestellt ist.

7. Keramik nach einem der vorhergehenden Ansprüche, dadurch gekennzeichnet, daß das Gewichtsverhältnis von erstem Keramikpulver zu zweitem Keramikpulver zwischen 75 bis 95 zu 25 bis 5, insbesondere 90 zu 10, beträgt.

8. Keramik nach Anspruch 1, dadurch gekennzeichnet, daß das erste Keramikpulver durch Beschichten eines Basisoxids mit einem Stabilisatoroxid, insbesondere mit Y₂O₃, hergestellt ist.

9. Keramik nach Anspruch 1, dadurch gekennzeichnet, daß das erste Keramikpulver aus Zirkoniumdioxid mit einem Stabilisatoroxidanteil von 4 bis 10 Mol% Y₂O₃ besteht und daß das zweite Keramikpulver Zirkoniumdioxid mit 10 Gew.% Al₂O₃ enthält.

10. Keramik nach Anspruch 1, dadurch gekennzeichnet, daß das erste Keramikpulver durch Aufschmelzen im Lichtbogen eines Gemisches aus einem Basis-Oxid und einem Stabilisatoroxid und Aufmahlen auf eine Korngröße im Bereich von 1 bis 2 µm hergestellt ist.

11. Verwendung einer temperaturschockresistenten Keramik nach einem der vorhergehenden Ansprüche als Festelektrolytkeramik für elektrochemische Anwendungen insbesondere für Gassensoren auf der Grundlage von sauerstoffionenleitenden Oxiden.

## Claims

1. Thermal-shock-resistant ceramic produced from at least one first ceramic powder and a second ceramic powder comprising the tetravalent oxides zirconium dioxide and/or hafnium dioxide and/or thorium dioxide as main component, where the ceramic powders used form, after being combined and jointly sintered, the homogeneous thermal-shock-resistant ceramic, characterized in that the first ceramic powder has a higher degree of stabilization than the second ceramic powder and the latter has a stabilizer oxide content of from 0 to 2.5 mol% of Y₂O₃ or the equivalent amount of another stabilizer oxide or stabilizer oxide mixture and in that the second ceramic powder comprises grains whose surface is completely or partially covered by a coating which inhibits the diffusion of stabilizer oxide cations.

2. Ceramic according to Claim 1, characterized in that the coating on the grains of the second ceramic powder comprises Al₂O₃ and/or Ga₂O₃ and/or Na-β-Al₂O₃.

3. Ceramic according to Claim 1 or 2, characterized in that the second ceramic powder comprises a mixture of ZrO₂ and Al₂O₃, preferably containing 10% by weight of Al₂O₃.

4. Ceramic according to Claim 1, characterized in that the first ceramic powder has a stabilizer oxide content of at least 4 mol% of Y₂O₃ or the equivalent amount of another stabilizer oxide or stabilizer oxide mixture.

5. Ceramic according to Claim 1, characterized in that the first ceramic powder has a particle size in the range from 0.5 to 2 µm and the second ceramic powder has a particle size of below 0.5 µm.

6. Ceramic according to Claim 1, characterized in that the first ceramic powder is prepared by coprecipitation of base oxides and stabilizer oxides from combined suspensions of the starting materials, calcination and subsequent milling.

7. Ceramic according to any of the preceding claims, characterized in that the weight ratio of the first ceramic powder to the second ceramic powder is 75-95:25-5, in particular 90:10.

8. Ceramic according to Claim 1, characterized in that the first ceramic powder is prepared by coating a base oxide with a stabilizer oxide, in particular with Y₂O₃.

9. Ceramic according to Claim 1, characterized in that the first ceramic powder comprises zirconium dioxide having a stabilizer oxide content of from 4 to 10 mol% of Y₂O₃ and in that the second ceramic powder comprises zirconium dioxide and 10% by weight of Al₂O₃.

10. Ceramic according to Claim 1, characterized in that the first ceramic powder is prepared by melting a mixture of a base oxide and a stabilizer oxide in an electric arc and milling to a particle size in the range from 1 to 2 µm.

11. Use of a thermal-shock-resistant ceramic according to any of the preceding claims as ceramic solid electrolyte for electrochemical applications, in particular for gas sensors based on oxides which conduct oxygen ions.

## Revendications

1. Céramique résistant aux chocs de températures, fabriquée à partir d'au moins une première poudre de céramique et d'une seconde poudre de céramique contenant des oxydes tétravalents dioxydes de zirconium et/ou dioxyde d'Hafnium et/ou de dioxyde de thorium comme composants principaux, la poudre céramique utilisée, après réunion et frittage commun, constituant la céramique homogène résistant aux chocs de température,
caractérisée en ce que
la première poudre de céramique est plus stable que la seconde poudre céramique et cette dernière présente une teneur en oxyde de stabilisant comprise entre 0 et 2,5 % mol, Y₂O₃ ou une quantité équivalente d'un autre oxyde stabilisateur ou mélange d'oxyde stabilisateur et la seconde poudre de céramique est sous forme de grains dont la surface est revêtue en totalité ou en partie avec un revêtement gênant la diffusion des cations de l'oxyde stabilisateur.

2. Céramique selon la revendication 1,
caractérisée en ce que
le revêtement des grains de la seconde poudre de céramique est en Al₂O₃ et/ou Ga₂O₃ et/ou Na-β-Al₂O₃.

3. Céramique selon la revendication 1 ou 2,
caractérisée en ce que
la seconde poudre céramique est un mélange de ZrO₂ et Al₂O₃ de préférence de 10 % en poids de Al₂O₃.

4. Céramique selon la revendication 1,
caractérisée en ce que
la première poudre de céramique contient une teneur en oxyde stabilisateur d'au moins 4 % mol, Y₂O₃ ou la quantité équivalente d'un autre oxyde stabilisateur ou d'un mélange d'oxyde stabilisateur.

5. Céramique selon la revendication 1,
caractérisée en ce que
la première poudre de céramique a une granulométrie de l'ordre de 0,5 à 2 µm et la seconde poudre de céramique a une granulométrie inférieure à 0,5 µm.

6. Céramique selon la revendication 1,
caractérisée en ce que
la première poudre de céramique est fabriquée par précipitation Ko d'oxyde de base avec des oxydes stabilisateurs provenant de suspensions réunies des matières premières, calcination puis broyage consécutif.

7. Céramique selon l'une des revendications précédentes,
caractérisée en ce que
le rapport pondéral de la première poudre céramique à la seconde poudre céramique est compris entre 75 et 95 jusqu'à 25 à 5, et notamment 90 à 10.

8. Céramique selon la revendication 1,
caractérisée en ce que
la première poudre céramique est fabriquée par revêtement d'un oxyde de base avec un oxyde stabilisateur, notamment Y₂O₃.

9. Céramique selon la revendication 1,
caractérisée en ce que
la première poudre céramique est formée de dioxyde de zirconium avec une teneur en oxyde stabilisateur comprise entre 4 et 10 % mol de Y₂O₃ et la seconde poudre de céramique contient du dioxyde de zirconium avec 10 % en poids de Al₂O₃.

10. Céramique selon la revendication 1,
caractérisée en ce que
la première poudre de céramique est obtenue par fusion à l'arc électrique d'un mélange d'un oxyde de base et d'un oxyde stabilisateur et broyage à une granulométrie de l'ordre de 1 à 2 µm.

11. Application d'une céramique résistant aux chocs de températures selon l'une quelconque des revendications précédentes, comme céramique à électrolyte solide pour des applications électrochimiques, notamment des capteurs de gaz reposant sur la base d'oxyde conducteur d'oxygène.
